## Europäisches Patentamt

## European Patent Office

## Office européen des brevets

(19)

(11) **EP 1 360 878 B1**

(12) **EUROPÄISCHE PATENTSCHRIFT**

(45) Veröffentlichungstag und Bekanntmachung des Hinweises auf die Patenterteilung:
**09.11.2005 Patentblatt 2005/45**

(21) Anmeldenummer: 02706615.8

(22) Anmeldetag: **23.01.2002**

(51) Int Cl.⁷: **H05B 39/04**, H02M 3/155

(86) Internationale Anmeldenummer:
**PCT/DE2002/000204**

(87) Internationale Veröffentlichungsnummer:
**WO 2002/065818 (22.08.2002 Gazette 2002/34)**

(54) **VORRICHTUNG ZUR ANSTEUERUNG EINER BELEUCHTUNGSEINRICHTUNG EINES KRAFTFAHRZEUGS**

DEVICE FOR CONTROLLING A LIGHTING DEVICE OF A MOTOR VEHICLE

DISPOSITIF POUR COMMANDER UN DISPOSITIF D'ECLAIRAGE D'UN VEHICULE AUTOMOBILE

(84) Benannte Vertragsstaaten:
**DE ES FR GB**

(30) Priorität: **09.02.2001 DE 10105903**

(43) Veröffentlichungstag der Anmeldung:
**12.11.2003 Patentblatt 2003/46**

(73) Patentinhaber: **ROBERT BOSCH GMBH**
**70422 Stuttgart (DE)**

(72) Erfinder:
  • **SCHENK, Joachim**
    **38536 Meinersen-Ohof (DE)**
  • **SCHUMPELT, Michael**
    **71739 Oberriexingen (DE)**
  • **HIRT, Juergen**
    **75177 Pforzheim (DE)**
  • **SCARLATA, Primo**
    **70839 Gerlingen (DE)**

(56) Entgegenhaltungen:
EP-A- 0 935 404    FR-A- 2 707 021
US-A- 5 594 323    US-A- 5 859 506
US-A- 5 942 853

**Beschreibung**

Stand der Technik

Die Erfindung geht aus von einer Vorrichtung zur Ansteuerung einer Beleuchtungseinrichtung eines Kraftfahrzeugs nach der Gattung des unabhängigen Anspruchs. Aus der EP-A 935 404 ist bereits eine Schaltung zur Stabilisierung der Spannung an einer Lampe, insbesondere für Scheinwerferlampen eines Kraftfahrzeugs, bekannt. Die Lampenspannung läßt sich bei verringerter Verlustleistung dadurch stabilisieren, daß in dem Lampenstromkreis ein zusätzlicher, mittels einer Ansteuerschaltung steuerbarer Zeitschalter einbezogen ist, daß bei einer Versorgungsspannung kleiner als die vorgegebene Nenn-Brennspannung der Lampe die Ansteuerschaltung den Zeitschalter dauernd eingeschaltet hält, und daß bei einer Versorgungsspannung größer als die Nenn-Brennspannung der Lampe die Ansteuerschaltung den Zeitschalter periodisch ein- und ausschaltet, wobei das Verhältnis Einschaltdauer zur Periodendauer dem Quadrat des Verhältnisses Nenn-Brennspannung zu anstehender Versorgungsspannung entspricht.

Aus der US-A-5 859 506 ist weiterhin eine Vorrichtung zur Ansteuerung einer Beleuchtungseinrichtung mit einer Steueranordnung, die ein pulsweitenmoduliertes Steuersignal für ein Schaltmittel erzeugt, bekannt, wobei der Steueranordnung ein Maß für die Versorgungsspannung, ein Aussenlichtpegel und ein Feedback-Signal zur Beeinflussung des Steuersignals zugeführt werden.

Es ist Aufgabe der vorliegenden Erfindung, die Beleuchtungsintensität einer im Kraftfahrzeug angeordneten Beleuchtungseinrichtung weiter zu stabilisieren, auch für unterschiedliche Betriebszustände des Kraftfahrzeugs. Diese Aufgabe wird durch die Merkmale des unabhängigen Anspruchs gelöst.

Vorteile der Erfindung

Die erfindungsgemäße Vorrichtung zur Ansteuerung einer Beleuchtungseinrichtung eines Kraftfahrzeugs weist eine Steueranordnung auf, die zumindest ein pulsweitenmoduliertes Steuersignal erzeugt für zumindest ein Schaltmittel, über das zumindest eine Beleuchtungseinrichtung mit elektrischer Energie versorgt werden kann. Der Steueranordnung ist ein Maß für die zumindest die Beleuchtungseinrichtung versorgende Versorgungsspannung zugeführt zur Beeinflussung des Steuersignals in Abhängigkeit von der Versorgungsspannung. Die Steueranordnung bestimmt das Steuersignal zumindest in Abhängigkeit von der Fahrgeschwindigkeit des Kraftfahrzeugs derart, dass das Steuersignal eine maximal Pulsweite aufweist, wenn die Versorgungsspannung einen von der Fahrgeschwindigkeit abhängigen unteren Grenzwert erreicht oder unterschreitet, und/oder eine minimale Pulsweite des pulsweitenmodulierten Steuersignals in Abhängigkeit von der Fahrgeschwindigkeit zwischen einem Minimum und einem Maximum der minimalen Pulsweite veränderbar ist, wenn die Versorgungsspannung einen oberen Grenzwert erreicht oder überschreitet. Dank der variablen Anpassung des pulsweitenmodulierten Steuersignals können unterschiedliche Betriebssituationen des Kraftfahrzeugs berücksichtigt werden, bei denen erfahrungsgemäß unterschiedlich stark schwankende Lichtintensitäten auftreten können. Steht das Kraftfahrzeug still, wird die Batterie in der Regel am meisten belastet, so daß die Stabilisierung Vorrang hat. Die Helligkeit beispielsweise der Scheinwerfer hingegen ist bei stehendem Fahrzeug nicht zu maximieren. Die Fahrgeschwindigkeit als ein möglicher Betriebsparameter wird bei der Ermittlung des Steuersignals berücksichtigt. Zudem wird während der Fahrt ein Flackern der Beleuchtung, hervorgerufen beispielsweise durch Zu- oder Abschalten weiterer elektrischer Lasten, kaum bemerkt. Die Stabilisierungsfunktion steht somit bei hohen Geschwindigkeiten nicht so stark im Vordergrund wie die ausreichende Helligkeit der Lampe bzw. der Scheinwerfer.

In einer zweckmäßigen Weiterbildung gibt die Steueranordnung eine maximale Pulsweite als Steuersignal vor, wenn die Versorgungsspannung den unteren Grenzwert unterschreitet. Die Berechnungsvorschrift für die Bestimmung der Pulsweite ist in der Steueranordnung in Abhängigkeit von dem unteren Grenzwert abgelegt. Nur dieser eine Wert muß fahrgeschwindigkeitsabhängig verändert werden, um die jeweilige Betriebssituation des Kraftfahrzeugs für die Festlegung des Steuersignals zu berücksichtigen. Der entsprechende Algorithmus ist somit relativ einfach aufgebaut.

In einer zweckmäßigen Weiterbildung hängt das Steuersignal von der Fahrgeschwindigkeit und von dem Ladezustand der Fahrzeugbatterie ab. Der Ladezustand wird beispielsweise in Verbindung mit der Versorgungsspannung vor dem Start des Kraftfahrzeugs ermittelt und für die neue Festlegung beispielsweise des unteren Grenzwerts herangezogen. Bei einer hohen Versorgungsspannung, die auf eine vollgeladene Fahrzeugbatterie hindeutet, kann der untere Grenzwert höher gewählt werden, da dann die Stabilisierung eine untergeordnete Rolle spielt. Bei einer relativ leeren Fahrzeugbatterie hingegen ist die Flackerneigung der Beleuchtungseinrichtung deutlich größer. Daher werden Versorgungsspannungsschwankungen in einem größeren Stabilisierungsbereich bei der Festlegung des Steuersignals berücksichtigt.

In einer zweckmäßigen Weiterbildung ist vorgesehen, daß die Steueranordnung eine minimale Pulsweite als Steuersignal vorgibt, wenn die Versorgungsspannung einen oberen Grenzwert überschreitet. Auch durch diese Festlegung der minimalen Pulsweite kann der Stabilisierungsbereich der Steueranordnung an die jeweilige Betriebssituation angepaßt werden. Insbesondere mit zunehmender Fahrgeschwindigkeit wird die minimale Pulsweite erhöht zur Anpassung des Stabilisierungsbereichs. Zusätzlich wird dadurch ein Überspannungsschutz und eine Lebensdauerverlängerung erreicht.

Weitere zweckmäßige Weiterbildungen ergeben sich aus weiteren abhängigen Ansprüchen und aus der Beschreibung.

Zeichnung

Ein Ausführungsbeispiel der erfindungsgemäßen Vorrichtung ist in der Zeichnung dargestellt und wird nachfolgend näher beschrieben.

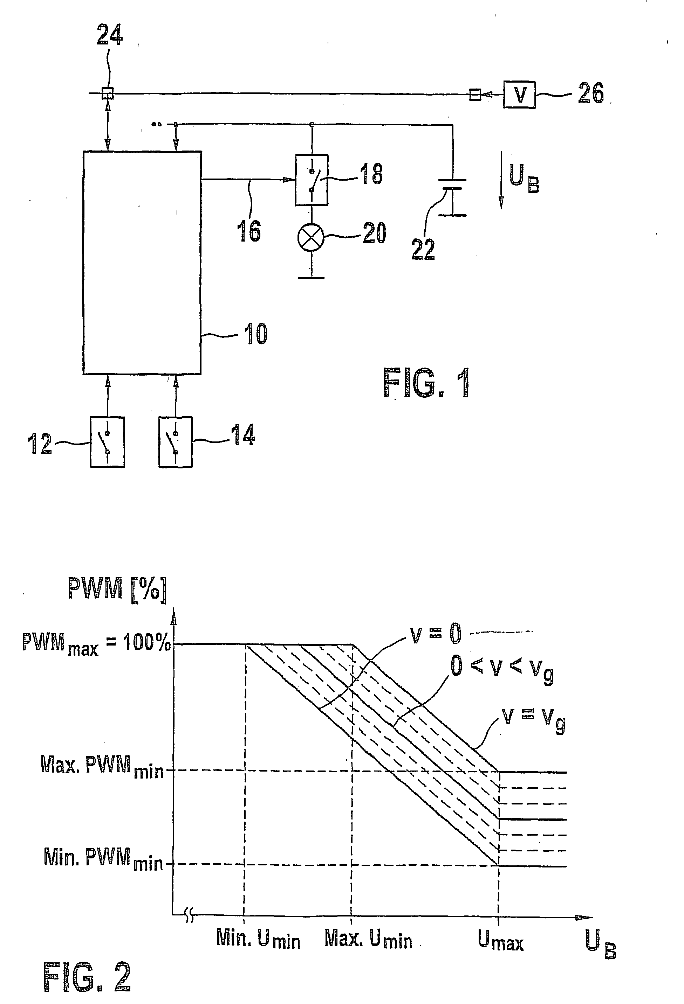

Es zeigen die Figur 1 ein Blockschaltbild sowie die Figur 2 eine betriebsparameterabhängige Ansteuerung für eine Beleuchtungseinrichtung.

Einem Mikrocontroller 10 sind ein Ausgangssignal eines ersten Bedienelements 12 und eines zweiten Bedienelements 14 zugeführt. Der Mikrocontroller 10 erzeugt nach einem bestimmten Berechnungsalgorithmus ein Ansteuersignal 16, mit dem ein Schaltmittel 18 im Sinne eines Öffnens oder Schließens angesteuert wird. Über das Schaltmittel 18 wird eine Lampe 20 mit der von einer Batterie 22 bereitgestellten Versorgungsspannung UB versorgt. Die Versorgungsspannung UB ist ebenfalls dem Mikrocontroller 10 zugeführt. Dieser tauscht außerdem Daten aus über ein Bussystem 24, über welches die von einem Geschwindigkeitssensor 26 erfaßte Fahrgeschwindigkeit v an den Mikrocontroller 10 gelangt.

Bei dem Ansteuersignal 16 handelt es sich um ein pulsweitenmoduliertes Signal, das sich zwischen maximaler Pulsweite $PWM_{max}$ von 100 % und dem Minimum min $PWM_{min}$ der minimalen Pulsweite $PWM_{min}$ bewegt. In Figur 2 ist ein linearer Zusammenhang der Pulsweite PWM und der Versorgungsspannung UB dargestellt. Exemplarisch sind drei Kennlinienverläufe aufgeführt in Abhängigkeit von der Fahrgeschwindigkeit v. So nimmt der untere Grenzwert $U_{min}$ mit abnehmender Fahrgeschwindigkeit von dem Wert max $U_{min}$ auf den Wert min $U_{min}$ ab. Erreicht oder unterschreitet die Versorgungsspannung UB den unteren Grenzwert $U_{min}$, so erzeugt der Mikrocontroller 10 als Steueranordnung ein Steuersignal 16 mit maximaler Pulsweite $PWM_{max}$ von beispielsweise 100 %, das heißt, das Schaltmittel 18 nimmt einen dauernd eingeschalteten Zustand ein. Im Bereich zwischen unterem Grenzwert $U_{min}$ und oberem Grenzwert $U_{max}$ nimmt die Pulsweite PWM mit zunehmender Betriebsspannung linear ab. Erreicht oder überschreitet die Betriebsspannung UB den oberen Grenzwert $U_{max}$, bleibt die Pulsweite PWM konstant in Höhe der minimalen Pulsweite $PWM_{min}$.

Der obere Grenzwert $U_{max}$ behält unabhängig von einer Veränderung der Fahrgeschwindigkeit v seinen Wert bei. Die minimale Pulsweite $PWM_{min}$ hingegen nimmt mit zunehmender Fahrgeschwindigkeit v zu. Sie schwankt somit zwischen dem Minimum Min $PWM_{min}$ der minimalen Pulsweite $PWM_{min}$ und dem Maximum Max $PWM_{min}$ der minimalen Pulsweite $PWM_{min}$. Mit zunehmender Fahrgeschwindigkeit v verkleinert sich der lineare, direkt proportionale Bereich, innerhalb dessen die Stabilisierung der variierenden Betriebsspannung UB durch Anpassung der Pulsweite PWM des Steuersignals 16 in Abhängigkeit von der Betriebsspannung UB vorgenommen wird.

Der Mikrocontroller 10 erzeugt das pulsweitenmodulierte Ansteuersignal 16, mit dem das Schaltmittel 18 ein- oder ausgeschaltet wird. Unter Pulsweite versteht man die Dauer der Einschaltzeit bezogen auf eine feste Taktzeit. Bei einer Pulsweite PWM von 100 % entspricht die Einschaltzeit der Taktzeit. Durch eine Veränderung der Pulsweite PWM kann die Lampe 20 mit unterschiedlicher Helligkeit beaufschlagt werden. Der Mikrocontroller 10 soll nun sicherstellen, daß auch bei schwankender Versorgungsspannung UB eine immer gleichmäßige Lichtintensität erreicht wird. Insbesondere ein Flackern der Lampe 20 soll verhindert werden, insbesondere bei starken Lastwechseln, die sich unmittelbar auf die Versorgungsspannung UB auswirken können. Zu diesem Zweck erfaßt der Mikrocontroller 10 die Versorgungsspannung UB und ermittelt nach folgendem Algorithmus die aktuelle Pulsweite:

$$PWM = (((U_{max} - UB) : (U_{max} - U_{min})) \cdot (PWM_{max} - PWM_{min})) + PWM_{min}$$

Wobei Umax: oberer Grenzwert
UB: Versorgungsspannung
Umin: unterer Grenzwert
PWMmax: maximale Pulsweite
PWMmin: minimale Pulsweite

Damit ergibt sich der in Figur 2 dargestellte lineare Zusammenhang für den mittleren Betriebsspannungsbereich ($U_{min} < UB < U_{max}$). Liegt die erfaßte Versorgungsspannung UB betragsmäßig unter dem unteren Grenzwert

$U_{min}$, wird das Schaltmittel 18 über das Ansteuersignal 16 mit maximaler Pulsweite $PWM_{max}$ angesteuert. Diese kann beispielsweise 100 % betragen, so daß in diesem Fall das Schaltmittel 18 dauernd geschlossen wäre. Die maximal mögliche Versorgungsspannung UB steht der Lampe 20 uneingeschränkt zur Verfügung. Somit wird die Lampe 20, insbesondere in starken Belastungsfällen (UB < $U_{min}$), mit maximal möglicher Leistung und somit maximal möglicher Intensität angesteuert.

Befindet sich die Versorgungsspannung UB zwischen unterem Grenzwert $U_{min}$ und oberem Grenzwert $U_{max}$ ($U_{min}$ < UB < $U_{max}$), so ist die Pulsweite PWM direkt proportional zu UB. Erreicht die Versorgungsspannung UB den oberen Grenzwert $U_{max}$ (UB ≥ $U_{max}$), so wird die Lampe 20 mit einer minimalen Pulsweite $PWM_{min}$ angesteuert, um in jedem Fall eine ausreichende Beleuchtung sicherzustellen.

In Figur 2 ist exemplarisch ein linearer Zusammenhang dargestellt zwischen der Versorgungsspannung UB und der Pulsweite PWM. Um jedoch die Lichtintensität versorgungsspannungsabhängig konstant zu halten, könnte auch ein parabelförmiger oder sonstiger mathematischer Zusammenhang zwischen Pulsweite PWM und Versorgungsspannung UB hergezogen werden. Die Kennlinie gemäß Figur 2 ist entsprechend an den jeweiligen Beleuchtungseinrichtungstyp anzupassen.

In Übereinstimmung mit Figur 2 wird nun fahrgeschwindigkeitsabhängig die Kennlinie verschoben, um die Stabilisierung der Lichtintensität an unterschiedliche Betriebszustände anzupassen. Zu diesem Zweck wird die Fahrgeschwindigkeit v durch einen Geschwindigkeitssensor 26 erfaßt und beispielsweise über das Bussystem 24 dem Mikrocontroller 10 mitgeteilt. Fahrgeschwindigkeitsabhängig variiert der untere Grenzwert $U_{min}$ zwischen einem minimalen unteren Grenzwert min $U_{min}$ und einem maximalen unteren Grenzwert max $U_{min}$. Mit zunehmender Fahrgeschwindigkeit v nimmt der untere Grenzwert $U_{min}$ betragsmäßig zu. Durch die in Figur 2 gezeigten Kennwertverläufe wird sichergestellt, daß ein großes Maß an Stabilisierung erreicht wird, wenn das Fahrzeug stillsteht (v = 0). Daher greift die Stabilisierungsfunktion in Form der linearen Kennlinie (im Bereich $U_{min}$ < UB < $U_{max}$) früher, als wenn das Fahrzeug fährt. Bewegt sich das Kraftfahrzeug (v > 0), so ist insbesondere die maximale Helligkeit der Lampe 20 für den Benutzer von Interesse. Daher verbleibt die Pulsweite PWM bei hohen Fahrgeschwindigkeiten für einen größeren Betriebsspannungsbereich auf dem maximalen Wert $PWM_{max}$ als bei niedrigen Fahrgeschwindigkeiten. Somit reduziert sich der Stabilisierungseffekt mit zunehmender Geschwindigkeit zugunsten maximaler Helligkeit.

Mit zunehmender Fahrgeschwindigkeit v wird bei gleichbleibendem oberen Grenzwert $U_{max}$ die minimale Pulsweite $PWM_{min}$ angehoben.

Die Geschwindigkeitsabhängigkeit des unteren Grenzwerts $U_{min}$ und/oder der minimalen Pulsweite $PWM_{min}$ ist in dem Mikroprozessor 10 in Tabellenform oder als direkter mathematischer Zusammenhang hinterlegt. Für die Berechnung der aktuellen Pulsweite PWM werden der entsprechend der Fahrgeschwindigkeit v angepaßte untere Grenzwert $U_{min}$ und die minimale Pulsweite $PWM_{min}$ dem Berechnungsalgorithmus zugrundegelegt.

In einer nicht gezeigten alternativen Ausgestaltung könnte auch der obere Grenzwert $U_{max}$ fahrgeschwindigkeitsabhängig ausgeführt sein und mit zunehmender Fahrgeschwindigkeit v betragsmäßig abnehmen.

In einer alternativen Ausgestaltung wird zusätzlich zu der Fahrgeschwindigkeit v der Ladezustand der Batterie 22 verwendet. Vor dem Start des Kraftfahrzeugs erfaßt der Mikrocontroller 10 die Versorgungsspannung UB als Maß für den Ladezustand der Batterie 22. Der Grad der Stabilisierung kann erhöht werden bei einem geringerem Ladezustand der Batterie 22, indem der Betriebsspannungsbereich mit betriebsspannungsabhängiger Pulsweitenfestlegung ($U_{min}$ < UB < $U_{max}$) vergrößert wird. Die Situation eines geringen Ladezustandes der Batterie 22 entspricht somit der bei niedrigen Fahrgeschwindigkeiten v. In Übereinstimmung mit Figur 2 erfolgt analog eine Anpassung des unteren Grenzwerts $U_{min}$ und der minimalen Pulsweite $PWM_{min}$.

Dem Mikrocontroller werden'außerdem die Ausgangssignale der Bedienelemente 12, 14 zugeführt. In Abhängigkeit von diesen Signalen wird die Lampe 20 aktiviert bzw. deaktiviert mit der ermittelten Pulsweite PWM.

Bei der Lampe 20 kann es sich vorzugsweise um den Scheinwerfer eines Kraftfahrzeugs oder um die Innenbeleuchtung handeln. Die Erfindung ist hierauf jedoch nicht eingeschränkt.


**Patentansprüche**


**1.** Vorrichtung zur Ansteuerung einer Beleuchtungseinrichtung eines Kraftfahrzeugs, mit einer Steueranordnung (10), die zumindest ein pulsweitenmoduliertes Steuersignal (16) erzeugt für zumindest ein Schaltmittel (18), über das zumindest eine Beleuchtungseinrichtung (20) mit elektrischer Energie versorgbar ist, wobei der Steueranordnung (10) ein Maß für die zumindest die Beleuchtungseinreichtung (20) versorgende Versorgungsspannung (UB) zugeführt ist zur Beeinflussung des Steuersignals (16) in Abhängigkeit von der Versorgungsspannung (UB), **dadurch gekennzeichnet, dass** die Steueranordnung (10) das Steuersignal (16) zumindest in Abhängigkeit von der Fahrgeschwindigkeit (v) des Kraftfahrzeugs derart bestimmt, dass das Steuersignal (16) eine maximale Pulsweite ($PWM_{max}$) aufweist wenn die Versorgungsspannung (UB) einen von der Fahrgeschwindigkeit abhängigen unteren Grenzwert ($U_{min}$) erreicht oder unterschreitet, und/oder eine minimale Pulsweite ($PWM_{min}$) des pulsweitenmodu-

lierten Steuersignals (16) in Abhängigkeit von der Fahrgeschwindigkeit (v) zwischen einem Minimum (Min $PWM_{min}$) und einem Maximum (Max $PWM_{min}$) der minimalen Pulsweite ($PWM_{min}$) veränderbar ist, wenn die Versorgungsspannung (UB) einen oberen Grenzwert ($U_{max}$) erreicht oder überschreitet.

2. Vorrichtung nach einem der vorhergehenden Ansprüche, **dadurch gekennzeichnet, dass** der untere Grenzwert ($U_{min}$) mit zunehmender Fahrgeschwindigkeit (v) zunimmt.

3. Vorrichtung nach Anspruch 1, **dadurch gekennzeichnet, dass** die Stueranordnung (10) das Steuersignal (16) in Abhängigkeit von der Fahrgeschwindigkeit (v) und dem Ladezustand einer Batterie (22) des Kraftfahrzeugs bestimmt.

4. Vorrichtung nach Anspruch 3, **dadurch gekennzeichnet, dass** der untere Grenzwert ($U_{min}$) mit zunehmendem Ladezustand der Batterie (22) zunimmt.

5. Vorrichtung nach einem der vorhergehenden Ansprüche 3 oder 4, **dadurch gekennzeichnet, dass** als Maß für den Ladezustand der Batterie (22) die Versorgungsspannung (UB) verwendet ist.

6. Vorrichtung nach einem der vorhergehenden Ansprüche, **dadurch gekennzeichnet, dass** der Steueranordnung (10) zumindest ein Signal eines Bedienelements (12, 14) zugeführt ist, und in Abhängigkeit dessen das Steuersignal (16) erzeugt ist.

## Claims

1. Device for controlling a lighting device of a motor vehicle, having a control arrangement (10), which produces at least one pulse-width-modulated control signal (16) for at least one switching means (18), by means of which at least one lighting device (20) can be supplied with electrical energy, the control arrangement (10) being fed a measure for the supply voltage (UB), which supplies at least the lighting device (20), for the purpose of influencing the control signal (16) as a function of the supply voltage (UB), **characterized in that** the control arrangement (10) determines the control signal (16) at least as a function of the driving speed (v) of the motor vehicle such that the control signal (16) has a maximum pulse width ($PWM_{max}$) if the supply voltage (UB) reaches or falls below a lower limit value ($U_{min}$) which is dependent on the driving speed, and/or a minimum pulse width ($PWM_{min}$) of the pulse-width-modulated control signal (16) can be changed as a function of the driving speed (v) between a minimum (Min $PWM_{min}$) and a maximum (Max $PWM_{min}$) of the minimum pulse width ($PWM_{min}$) if the supply voltage (UB) reaches or exceeds an upper limit value ($U_{max}$).

2. Device according to one of the preceding claims, **characterized in that** the lower limit value ($U_{min}$) increases as the driving speed (v) increases.

3. Device according to Claim 1, **characterized in that** the control arrangement (10) determines the control signal (16) as a function of the driving speed (v) and the state of charge of a battery (22) of the motor vehicle.

4. Device according to Claim 3, **characterized in that** the lower limit value ($U_{min}$) increases as the state of charge of the battery (22) increases.

5. Device according to one of the preceding Claims 3 or 4, **characterized in that** the supply voltage (UB) is used as a measure for the state of charge of the battery (22).

6. Device according to one of the preceding claims, **characterized in that** at least one signal from an operating element (12, 14) is fed to the control arrangement (10), and the control signal (16) is produced as a function of this signal.

## Revendications

1. Dispositif de commande d'un dispositif d'éclairage d'un véhicule automobile, comprenant un système de commande (10) générant au moins un signal de commande modulé en largeur d'impulsion (16) pour au moins un moyen de commutation (18) qui alimente au moins un dispositif d'éclairage (20) en énergie électrique, le système de commande (10) recevant une mesure de la tension d'alimentation (UB) alimentant au moins le dispositif d'éclairage (20), afin d'influencer le signal de commande (16) en fonction de la tension d'alimentation (UB),

**caractérisé en ce que**

le système de commande (10) détermine le signal de commande (16) au moins en fonction de la vitesse (v) du véhicule automobile, de telle sorte que le signal de commande (16) présente une largeur d'impulsion maximale ($PWM_{max}$) lorsque la tension d'alimentation (UB) atteint ou passe en dessous d'une valeur limite inférieure ($U_{min}$) dépendante de la vitesse du véhicule, et/ou

une largeur d'impulsion minimale ($PWM_{min}$) du signal de commande modulé en largeur d'impulsion (16) varie, en fonction de la vitesse du véhicule (v), entre un minimum (Min $PWM_{min}$) et un maximum (Max $PWM_{min}$) de la largeur d'impulsion minimale ($PWM_{min}$) lorsque la tension d'alimentation (UB) atteint ou dépasse une valeur limite supérieure ($U_{max}$).

2. Dispositif selon l'une des revendications précédentes,
   **caractérisé en ce que**
   la valeur limite minimale ($U_{min}$) augmente à mesure que la vitesse de conduite (v) augmente.

3. Dispositif selon la revendication 1,
   **caractérisé en ce que**
   le système de commande (10) détermine le signal de commande (16) en fonction de la vitesse de conduite (v) et de l'état de charge d'une batterie (22) du véhicule automobile.

4. Dispositif selon la revendication 3,
   **caractérisé en ce que**
   la valeur limite inférieure ($U_{min}$) augmente à mesure que l'état de charge de la batterie (22) augmente.

5. Dispositif selon l'une des revendications précédentes 3 ou 4,
   **caractérisé en ce que**
   comme mesure de l'état de charge de la batterie (22) on utilise la tension d'alimentation (UB).

6. Dispositif selon l'une des revendications précédentes,
   **caractérisé en ce que**
   le système de commande (10) reçoit au moins un signal d'un élément de commande (12, 14), en fonction duquel est généré le signal de commande (16).

FIG. 1

FIG. 2